# EUROPEAN PATENT APPLICATION

(11) **EP 0 526 703 A2**
(43) Date of publication of application: **10.02.1993**
(21) Application number: 92108834.0
(22) Date of filing: 26.05.1992
(51) Int. Cl.: G11B 25/04, G11B 33/12

(54) **Compact disk drive useful for laptop computer**

(30) Priority: 29.07.1991 US 736797; 02.04.1992 US 863160
(71) Applicant: AREAL TECHNOLOGY, INC., San Jose, California 95131 (US)
(72) Inventor: Hoppe, Robert F., Campbell, California 95008 (US); Kumano, Akihiko, Cupertino, California 95014 (US)
(74) Representative: Körber, Wolfhart, Dr.rer.nat.

(57) **Abstract**

A disk drive useful for a portable computer comprises a printed circuit board (PCB) and head/disk assembly HDA including a generally rectangular baseplate for mounting a stack of one or more magnetic disks for rotation about an axis normal to the baseplate and a read/write magnetic head actuator mounted for pivotal movement about an axis also normal to the baseplate. An enclosure formed by the baseplate and a configured cover surrounds the actuator and disk stack to maintain a relatively "clean" contaminant free environment. The PCB which includes the electronic circuits and components associated with the disk drive is mounted in a plane parallel to the surface of the baseplate and in close proximity to the cover of the enclosure in order to keep the overall height of the assembly as low as possible since the height of the assembly dictates the height dimension of the laptop computer. In the preferred embodiment, the sides of the enclosure extend normal to the plane of the baseplate from the four perimeter sides of the rectangular baseplate to a plane slightly above the top of the arm actuator, which is the tallest element within the enclosure. The thin shell cover is attached to the baseplate and conforms generally to the profile of the actuator mechanism and the disk stack. The PCB is mounted adjacent to the cover so that all of the electronic components having relatively high profiles may be positioned on the board in locations which are immediately opposite the areas of the cover which extend into the empty spaces adjacent to the actuator and disk stack.

## Description

### Field of the Invention

This invention relates to compact disk drives useful for storing information in a laptop portable computer and in particular to a disk drive assembly that affords a significant reduction in the overall height of the drive.

### Description of the Prior Art

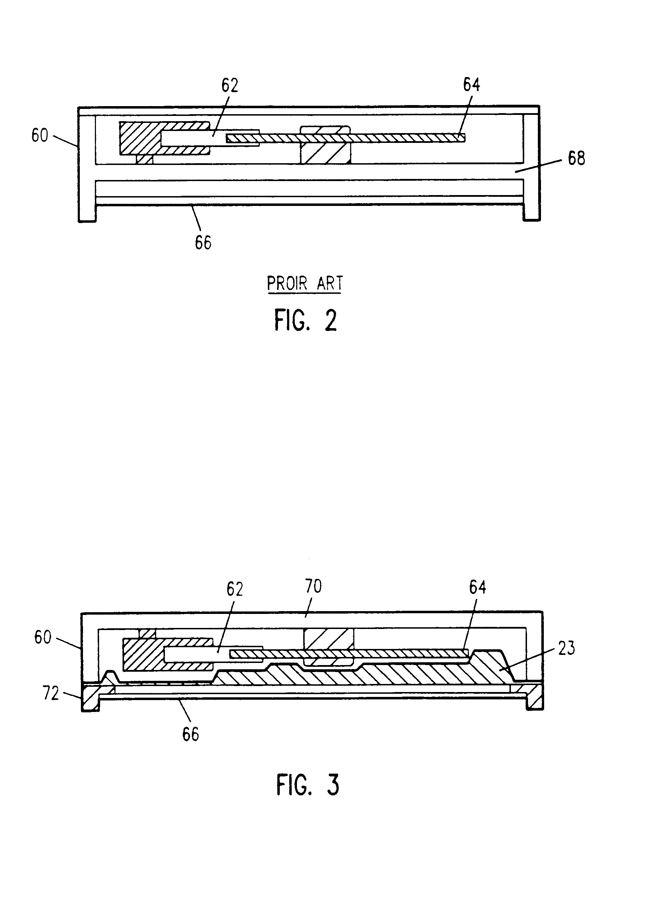

Figure 2 illustrates a prior art disk drive or head/disk assembly (HDA) 60 that includes a stack of magnetic disks 64 which are continuously rotated on a motor hub. Concentric recording tracks are defined on the surfaces of the disks, each of which stores binary data in the form of magnetic transitions. Read/write (R/W) heads are mounted on head arms and are moved to selected recording tracks by means of a head actuator 62. As the disks are rotated at high speed, the R/W heads fly relative to the disk surfaces at a height determined by the aerodynamics of the head slider which supports the magnetic transducers and the opposing gram load force provided by a spring element formed with the head arm.

Two types of actuator mechanisms have been employed to move the R/W heads to an addressed recording track. One type moves the heads linearly along a radial line relative to the axis of rotation of the disk stack. In the second type, movement is along an arc having a center spaced a short distance from the edge of the disk stack. During operation of the disk drive, it is necessary to ensure that the heads move in a plane substantially parallel to the disk surfaces. Because of the relatively close tolerances involved between the R/W heads and the magnetic surfaces, a rigid baseplate 68 is employed for mounting the components of the disk drive assembly. A printed circuit board (PCB) 66 is positioned below the baseplate 68 for electrical connection to external circuitry.

The amount of data that can be stored on a disk drive is dependent on several parameters, such as the number of disks in the stack, the size of the disks, the track density, the radial width of the recording band and the linear recording density along a track, i.e., bits per inch. Factors affecting recording density include such items as the magnetic material on the disk surface, the thickness of the material, and the finish and smoothness of the surface. The size and shape of the air gap formed in the magnetic transducers of the R/W heads have a direct bearing on the linear recording density and also on track density.

The volume of data that can be stored on a disk file is also affected by the electronics that control the conversion of binary data into flux transitions, i.e. the recording code and servo control of the read/write heads. The ability to record flux transitions closer together and to accurately read these transitions has been increased by improved encoding techniques. Track densities have been increased by the use of track following ser- vosystems which cause the actuator to follow a prerecorded servo track in a cylinder of correspondingly disposed data tracks. In addition to being rated by the amount of data that can be stored, disk drives are also rated by the average access time required to reach a given address on the disk. Access time is a function of head movement and rotational speed of the disk stack.

With the advent of personal computers and the desire to provide increased on-line storage capacities for operating systems and application programs over and above that provided by removable flexible disk storage media, hard disk drives were developed having the same "form fit" as the 5t inch drives with removable floppy diskettes that were provided as original equipment with most personal computers. This allowed many PC system units equipped with two floppy diskette drives to replace one diskette drive with a 5t inch hard drive. Subsequently with increases in the disk storage technology and the need to make smaller size units and battery operated portable personal computers, a 3t inch form fit diskette drive was developed with a similar hard drive.

Some of the early portable PC units were quite heavy and were not very successful from a marketing standpoint. The disk drive technology has improved to the point that presently known portable battery operated computers average about 7 to 8 pounds, are slightly larger than the average novel or book, and are commonly referred to as notebook or laptop computers. The desire to maintain hard disk storage capacity in these smaller units and to increase storage capacity while decreasing the space occupied has dictated smaller size disks. Typically, this has required the use of more disks in the stack which tends to increase the overall height of the drive if an equivalent storage capacity is to be maintained. Since the keyboard occupies substantially the entire surface of the computer unit when it is being used, the hard disk drive is mounted between the bottom of the keyboard and the top surface of the mother-board which is mounted at the bottom of the unit. The thickness or height of the hard disk assembly is therefore generally a significant limiting factor in setting the overall height dimension of the computer unit. A need therefore exists to provide a relatively thin HDA without compromising data storage capacity of the disk drive.

### Summary of the Invention

In accordance with the invention, a compact disk drive useful for storing data in a laptop portable computer comprises a head/disk assembly having components of different heights. These components include at least one storage disk, a drive motor for rotating said disk, a number of R/W heads and an actuator for moving said heads relative to said disk. In keeping with this invention, the disk drive is provided with a nonplanar conformal cover having a cross-sectional profile that conforms to the profile of the components which are mounted to the lower surface of an overhead baseplate of the HDA. By positioning the tallest PCB components immediately opposite areas of the conformal cover that are depressed toward the upper baseplate, the plane of the PCB is moved closer to the nonplanar cover, thereby resulting in a thinner disk drive. The depressed areas of the conformal cover accommodate the taller components of the HDA without any conflict and the space occupied by the HDA portion of the drive and the associated PCB is kept to a minimum. The baseplate and its sidewalls and the conformal cover form a sealed airtight enclosure which maintains a clean HDA area virtually free of deleterious contaminants.

In the preferred embodiment of this invention, the conformal cover comprises a thin foil member having portions that are depressed inwardly towards the upper baseplate into the empty spatial areas not occupied by the various mechanical disk drive components. Since the various components employed on the PCB extend different distances above the surface of the board, the tallest components can be positioned on the board to be in the areas defined by the depressed portions of the conformal cover, thus allowing the plane of the PCB to be disposed at a shorter distance from the cover. The overall height of the resulting disk drive is therefore significantly reduced compared to prior art disk drives.

An object of this invention is to provide an improved disk drive which occupies less space in a computer without compromising storage capacity.

Another object of the invention is to provide a disk drive for use in a laptop portable computer that allows the height of the computer to be reduced.

Another object is to provide an improved arrangement for a hard disk drive in which a foil cover encloses the various mechanical components of the HDA in a manner that conforms to a vertical profile of the enclosed components.

A further object of the invention is to reduce the overall height of a hard disk drive by providing a cover which allows the empty space between the baseplate and the HDA cover that is not occupied by the mechanical components of the drive to be used by exterior components mounted contiguous to the housing.

### Brief Description of the Drawing

The invention will be described in greater detail with reference to the drawing in which :
Fig. 1 is a perspective view of a laptop computer, partly in section, showing the placement of the hard disk drive of the present invention;
Fig. 2 is a schematic sectional view of a prior art hard disk drive;
Fig. 3 is a schematic view, partly in section, of a disk drive employing a conformal cover in accordance with the present invention;
Fig. 4 is an exploded perspective view of the hard disk drive shown schematically in Fig. 3;
Fig. 5 is a plan view of the disk drive shown in Fig. 4; and
Fig. 6 is a side view taken along the line VI-VI in Fig. 5 showing the profile of the mechanical components.

### Description of the Preferred Embodiment

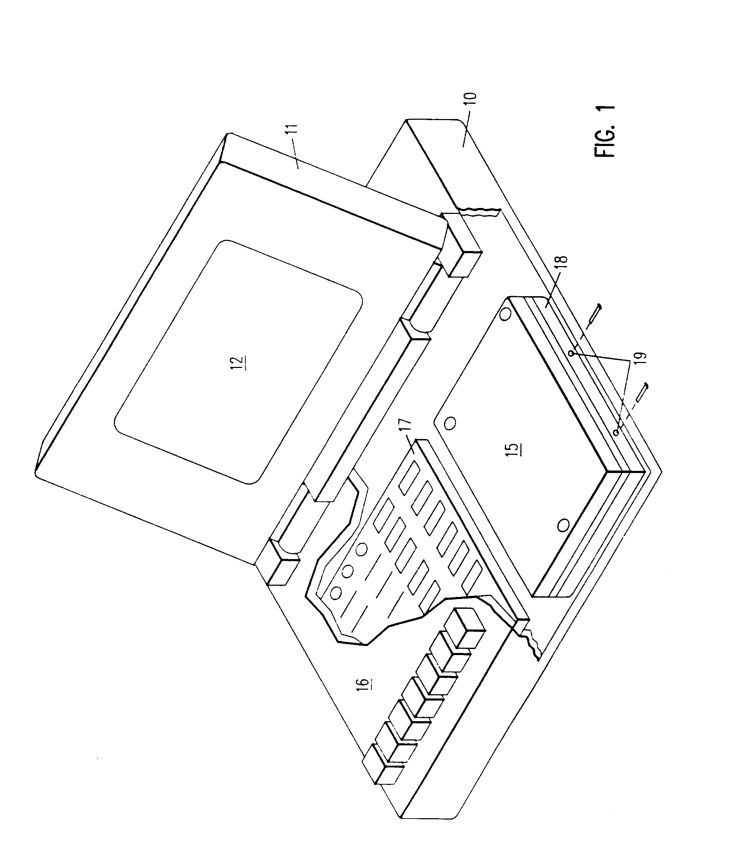

Fig. 1 illustrates a conventional portable laptop computer that includes a case 10 and a cover 11 which is hinged to the top portion of the case 10. A display screen 12 is mounted to the case 10. The cover 11 is arranged so that in the open position it is tilted backward slightly to provide a convenient viewing angle to the user. The weight of a typical laptop computer is in the range of 7 to 10 pounds, and the computer dimensions are close to the size of a book, which is the reason for the designation "notebook" computer. The footprint for these portable computers in the operating position is approximately 12 inches by 7 inches. The overall height with the cover 11 closed is less than 2 inches. Since the height of the case 10 is one of the major determining factors in the overall weight of the device, it is important to minimize the height of the case.

As shown in Fig. 1, a disk drive 15 is positioned between a keyboard 16 and the bottom of the case 10. A portion of the keyboard 16 has been broken away to illustrate the placement of the disk drive 15 relative to the mother-board 17 and a C-frame 18 which is the industry standard for mounting drive 15 in the case 10. The mother-board 17 lies parallel to the bottom of the case 10 and extends to the disk drive but not underneath it. The dimensions of the keyboard 16 and mother-board 17 are important factors in determining the "foot print" of the laptop.

Fig. 2 illustrates a typical prior art disk drive arrangement comprising the combination of an HDA 60 and PCB 66. As shown in Fig. 2, the PCB 66 is mounted underneath the baseplate 68. The spacing of the PCB 66 from the bottom of the baseplate 68 is determined by the highest component that is mounted on the PCB. As a result, the overall height dimension of the disk drive is determined in part by the height dimensions of the components on the PCB.

Fig. 3 illustrates the novel disk drive configuration which, in accordance with the present invention, is provided with a conformal cover 23 that permits lowering the overall height dimension of the disk drive package. The PCB 66 is positioned closely adjacent to the cover 23 with the PCB components having the greatest height disposed opposite those areas of the cover that are depressed into the empty spaces of the HDA that are not occupied by the HDA mechanical components.

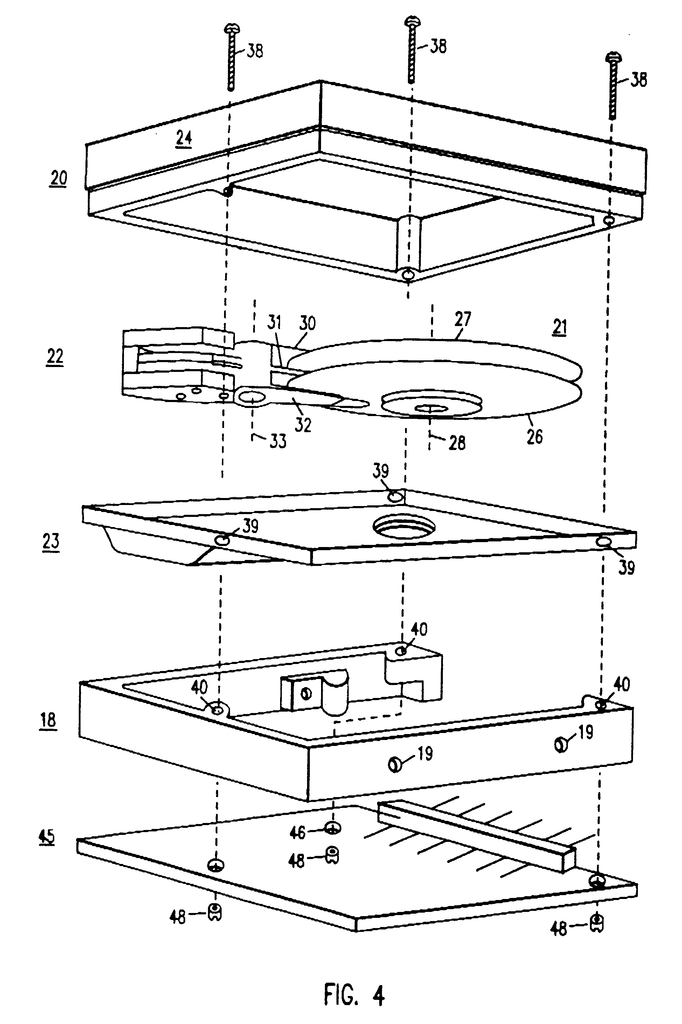

The HDA shown schematically in Fig 3 is shown in Fig. 4 in an exploded view. The HDA comprises a baseplate 20, disk assembly 21, magnetic head actuator 22 and the cover 23. As shown, the baseplate 20 is generally rectangular in shape and is provided with integral sidewalls 24 which extend normal to the plane of the baseplate 20. The disk assembly 21 comprises a pair of magnetic disks 26, 27 which are mounted for rotation about an axis 28 disposed normal to the plane of baseplate 20. The actuator 22 comprises three arm members 30, 31 and 32 which are mounted for rotation about an axis 33 disposed normal to baseplate 20 and spaced outside the perimeter of the disks 26, 27. The head arms 30, 31 and 32 support magnetic transducers for transferring data to and from the respective surfaces of disks 26 and 27. The disk assembly 21 and the actuator 22 are only shown schematically in the drawing for the purpose of explanation.

A feature of the invention is that the conforming cover 23 mates with the sides 24 of the baseplate 20 to form a sealed "clean" enclosure which is kept relatively free of any contaminants that may adversely affect the transfer of data or the life of the respective assemblies contained in the "clean" area.

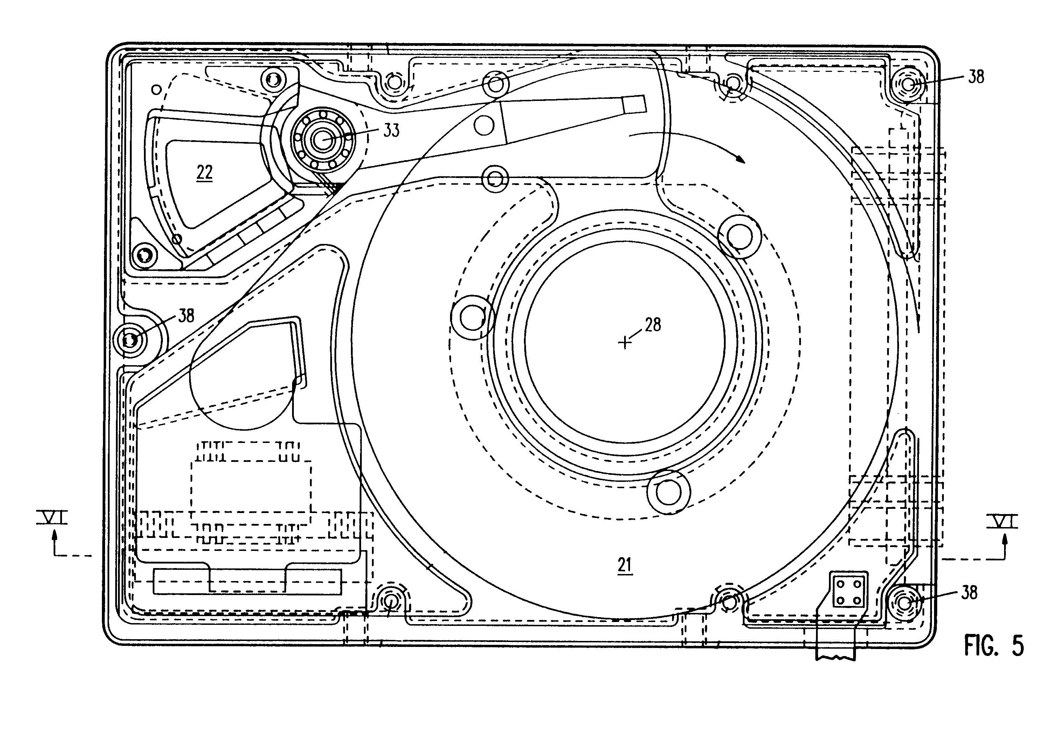

The disk drive assembly also includes a C-frame 18 which is used to attach the drive assembly to the sides of the case 10. Both the sides and bottom of frame 18 is provided with tapped holes 19, which receive mounting screws (not shown) for attaching the drive to case 10 as shown in Fig. 1. The C-frame 18 also serves to clamp the cover 23 to the baseplate 20 and acts as the mounting platform for the PCB 45 associated with the HDA. With reference to Figs. 4 and 5, three screws 38 extend vertically through the sides 4 of the baseplate 20 and through gasket openings 39 in cover 23 into tapped openings 40 in frame 18.

In practice, during the process of assembling the disk drive, the baseplate 20 is inverted and the disk stack 21 and the actuator 22 are mounted to the baseplate while in this position. The cover 23 is positioned on the C-frame 18 with the respective openings 39 aligned with the tapped holes 40 in the C-frame. The baseplate 20 is then turned upright and positioned on the cover 23 to permit the screws 38 to extend through the openings 39 into the tapped holes 40. Tightening the screws 38 clamps the C-frame 18 and cover 23 to baseplate 20. A gasket (not shown) is provided to provide a tight seal around the cover and the screw openings to preclude the entrance of contaminants into the HDA area. The screws 38 are made long enough to protrude about 1/8 inch from tapped mounting bosses in the C-frame 18. The PCB 45, which contains the electronic circuitry and components associated with the control and data flow of the disk drive, is placed over the screws 38 and fastened with nuts 48.

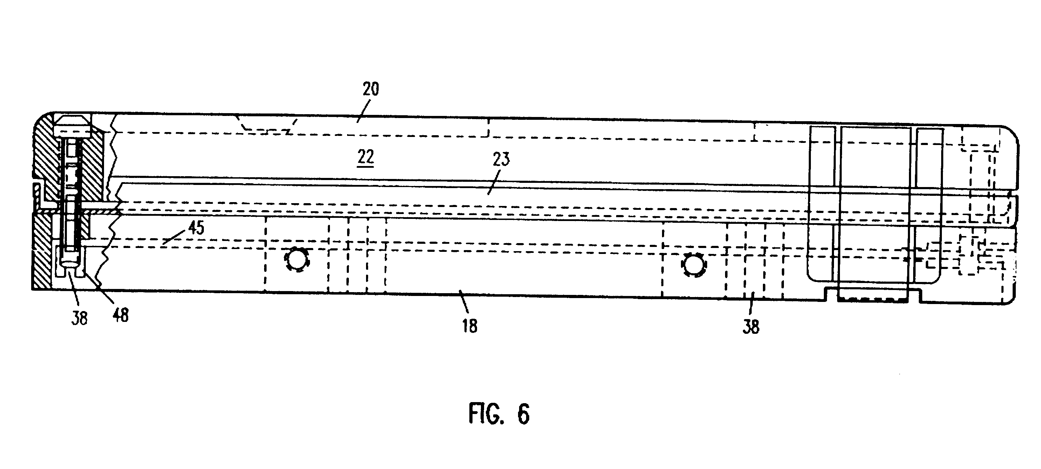

The side view of Fig. 6 taken along the line VI-VI in Fig 5 illustrates the cover 23 conforming to the vertical profile of the actuator and disk stack components of the HDA so that unused space in the clean area of the HDA is now used as space for the electronic components of the HDA.

By virtue of the novel design of the disk drive disclosed herein, a disk drive package including a stack of two disks having a form factor of about 0.59 inch in height, 3.45 inches in length and 2.75 inches in width has been made possible. The height of the highest PCB component was 0.100 inch. The baseplate 20 and C-frame 18 was made of approximately 0.050 inch thick aluminum casting and the conformal cover was made of an aluminum membrane about 0.016 inch thick. In an implementation of the invention, average access time of less than 16 milliseconds was realized with relatively high lineal and areal recording densities.

In this two disk implementation, a data capacity of 120 megabytes to 180 megabytes is made available.

The design disclosed herein is also applicable to a single disk version of a disk drive which was implemented with a height of about 0.47 inch, a length of 3.45 inches and a width of 2.75 inches. The single disk version has a capacity of 90 megabytes of data.

It should be understood that the invention is not limited to the specific materials and parameters set forth above. Parts may be made with plastic material that have closely matching thermal coeeficients of expansion, for example. The mother-board below the keyboard may extend under the disk drive package so that a single board is used for the computer functions and the HDA operation. Other modifications may be made in the design within the scope of the invention.

A disk drive useful for a portable computer comprises a printed circuit board (PCB) and head/disk assembly HDA including a generally rectangular baseplate for mounting a stack of one or more magnetic disks for rotation about an axis normal to the baseplate and a read/write magnetic head actuator mounted for pivotal movement about an axis also normal to the baseplate. An enclosure formed by the baseplate and a configured cover surrounds the actuator and disk stack to maintain a relatively "clean" contaminant free environment. The PCB which includes the electronic circuits and components associated with the disk drive is mounted in a plane parallel to the surface of the baseplate and in close proximity to the cover of the enclosure in order to keep the overall height of the assembly as low as possible since the height of the assembly dictates the height dimension of the laptop computer. In the preferred embodiment, the sides of the enclosure extend normal to the plane of the baseplate from the four perimeter sides of the rectangular baseplate to a plane slightly above the top of the arm actuator, which is the tallest element within the enclosure. The thin shell cover is attached to the baseplate and conforms generally to the profile of the actuator mechanism and the disk stack. The PCB is mounted adjacent to the cover so that all of the electronic components having relatively high profiles may be positioned on the board in locations which are immediately opposite the areas of the cover which extend into the empty spaces adjacent to the actuator and disk stack.

## Claims

1. A disk drive for use with portable computers comprising:
a head/disk assembly including components of different heights, said components including at least one storage disk, drive means for rotating said disk, a plurality of read/write heads, and an actuator for transporting said heads relative to said disk;
a housing comprising an upper baseplate to which said assembly is mounted and a nonplanar configured cover attached to said baseplate for enclosing said assembly;
a frame attached to said housing; and
a printed circuit board disposed within said frame below said cover.

2. A disk drive as in Claim 1, wherein said configured element closely conforms to the different heights of said components of said head/disk assembly.

3. A disk drive as in Claim 1, wherein said drive comprises two storage disks positioned along the same central axis for simultaneous rotation.

4. A disk drive as in Claim 1, wherein said housing, cover and frame are made of aluminum.

5. A disk drive for use with a portable computer comprising: a head/disk assembly having mechanical components of different heights;
a baseplate with sidewalls;
a frame coupled to said baseplate;
a configured element attached to said baseplate to form an enclosure for said head/disk assembly;
a printed circuit board having components of different heights;
wherein the height of said disk drive is about 0.59 inch, the length is 3.45 inches and the width is 2.75 inches.

6. A disk drive for use with a portable computer comprising:
a printed circuit board;
a head/disk assembly;
a nonplanar conformal cover disposed between said board and said assembly;
means for mounting said board in closely spaced relationship to said cover with the electronic components on said board having the greatest height disposed immediately opposite areas of said cover selected to minimize the overall height of said drive.

7. A disk drive as in Claim 6, including a baseplate, a stack of magnetic disks mounted for rotation about an axis normal to said baseplate, and an actuator for positioning magnetic heads in operating relationship with said disks by pivotal movement about an axis disposed normal to said baseplate and spaced from the perimeter of said disks.

8. A disk drive as in Claim 7, wherein said baseplate includes integral sides and said conformal cover has a perimeter portion that mates with said sides to define a "clean" sealed space for said actuator and said stack.

9. A disk drive as in Claim 8, wherein said selected areas of said conformal cover comprise integral sections that extend toward said baseplate into empty areas of said "clean" space.

10. A disk drive as in Claim 9, wherein said means for mounting comprises a frame member having a perimeter which corresponds generally to the perimeter of said baseplate and which is removably attached to said baseplate and means for clamping the perimeter of said cover to said sides of said baseplate.

11. A disk drive as in Claim 11, wherein said frame member is adapted to be attached to the side of a case for a laptop portable computer.

12. A disk drive as in Claim 11, wherein said frame member includes means for attaching said board to said frame member with the surface of said board closely adjacent to said cover.

13. A disk drive comprising:
a printed circuit board;
a head/disk assembly;
a generally rectangularly shaped baseplate;
a disk array including at least one magnetic disk mounted for rotation about an axis normal to the plane of said baseplate;
a read/write magnetic head actuator mounted for pivotal movement about a second axis disposed normal to said plane and positioned outside an imaginary cylinder defined by said disk array;
a housing for enclosing said said array and said actuator, said housing including a sidewall extending from the surface of said baseplate and having an upper edge surface disposed in a second plane parallel to the surface of said baseplate, and a foil-like cover including a perimeter edge attached to said upper edge surface, said cover conforming to the profile of said array and said actuator to create discrete empty spaces that are between the top surface of said cover and said second plane, said PCB having electronic circuits and components functionally associated with said apparatus and being disposed in a third plane parallel to said baseplate with substantially all of said electronic components mounted on the surface of said board adjacent to said cover, selected ones of said components having relatively high profiles being positioned on said board in areas that are juxtaposed to said empty spaces in order to minimize the overall height of said assembly.

14. A disk drive as in Claim 1, wherein said at least one storage disk comprises a single disk, said disk drive being no greater than 0.47 inch high, 3.45 inches long and 2.75 inches wide.

15. A disk drive as in Claim 14, wherein said disk drive has a data storage capacity of about 90 megabytes.

16. A disk drive as in Claim 1, wherein said at least one storage disk comprises two disks, said disk drive being no greater than 0.59 inch high, 3.45 inches long and 2.75 inches wide.

17. A disk drive as in Claim 16, wherein said disk drive has a data storage capacity of 120 megabytes or 180 megabytes.

18. A disk drive comprising storage disk means, magnetic head means and a circuit assembly, a housing for enclosing said means and said assembly, said disk drive being approximately 0.59 inch high, 3.45 inches long and 2.75 inches wide.

19. A disk drive comprising storage disk means, magnetic head means and a circuit assembly, a housing for enclosing said means and said assembly, said disk drive being approximately 0.47 inch high, 3.45 inches long and 2.75 inches wide.
